(19) Europäisches Patentamt
European Patent Office
Office européen des brevets

(11) **EP 2 251 773 B1**

(12) **FASCICULE DE BREVET EUROPEEN**

(45) Date de publication et mention
de la délivrance du brevet:
**18.07.2012 Bulletin 2012/29**

(51) Int Cl.:
***G06F 3/045*** *(2006.01)* ***G06F 3/041*** *(2006.01)*

(21) Numéro de dépôt: **10162023.5**

(22) Date de dépôt: **05.05.2010**

(54) **Procedé de validation de données de coordonnées déterminées par une dalle tactile resistive, et d'élimination de données de coordonnées erronées**

Verfahren zur Validierung von Koordinatendaten einer resistive Berührungsempfindlichen Oberfläche, und zum Ausschluss von fehlerhaften Koordinatendaten

Method of validating coordinate data determined by a resistive touch surface, and of discarding erroneous coordinate data

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **05.05.2009 FR 0952975**

(43) Date de publication de la demande:
**17.11.2010 Bulletin 2010/46**

(73) Titulaire: **MAGNETI MARELLI FRANCE**
**78190 Trappes (FR)**

(72) Inventeur: **Dubin, Michel**
**86130 Jaunay-Clan (FR)**

(74) Mandataire: **Texier, Christian et al**
**Cabinet Regimbeau**
**20, rue de Chazelles**
**75847 Paris Cedex 17 (FR)**

(56) Documents cités:
**EP-A1- 1 411 420 WO-A1-02/03368**

**Description**

Domaine de l'invention

L'invention concerne le domaine des procédés et dispositifs de validation et d'élimination de détermination de données de coordonnées pour dalle tactile résistive dans un environnement automobile lorsqu'un opérateur exerce et/ou déplace un appui sur cette dalle tactile.

État de la technique

L'adaptation de dispositifs à dalle tactile résistive dans un environnement automobile n'est pas aisée. Cet environnement est fortement contraint et le dispositif est installé dans une architecture particulière propre au domaine automobile, ajoutant des difficultés d'utilisation.

Le marché grand public (tablettes graphiques, téléphone portable, PDA, etc.) a inspiré celui de l'automobile en ce qui concerne l'amélioration de l'interface homme-machine. Cependant, les contraintes environnementales sont différentes, et la longévité des dispositifs n'est pas comparable.

C'est pourquoi il n'est pas possible d'utiliser les dispositifs disponibles sur le marché grand public pour les adapter au domaine automobile.

Une dalle tactile résistive permet la détection d'appuis effectués par un opérateur en interaction direct ou indirect (par exemple, à travers un écran tactile) avec la dalle tactile résistive grâce à un contrôleur.

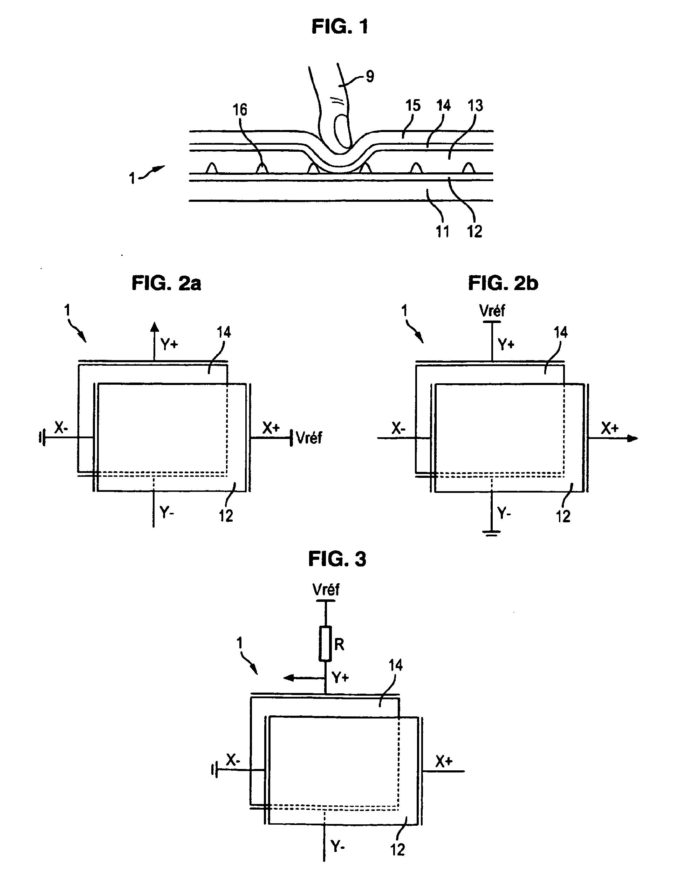

Un exemple de dalle tactile résistive est décrit ci-après en référence à la figure 1.

La dalle 1 tactile résistive est transparente et est composée dans l'ordre de :

■ une première couche **11** en verre au contact du dispositif d'affichage ;
■ une deuxième couche **12** en un matériau conducteur ;
■ une troisième couche **13** d'air ;
■ une quatrième couche **14** en un matériau conducteur ;
■ une cinquième couche **15** en verre ou un film.

Le matériau conducteur des deuxième **12** et quatrième **14** couches peut être, par exemple, de l'oxyde d'indium-étain.

Dans la troisième couche **13** d'air, peuvent être présents des « espaceurs » **16** permettant de maintenir à distance les deuxième **12** et quatrième **14** couches, évitant ainsi des contacts fortuits.

Lorsqu'un opérateur exerce un appui sur la dalle **1** tactile résistive, plus précisément sur la cinquième couche **15,** à l'aide, par exemple, de son doigt **9** ou d'un stylet, les deuxième **12** et quatrième **14** couches se rapprochent. Lorsque la pression de l'appui est suffisante, les deuxième **12** et quatrième **14** couches viennent au contact l'une de l'autre, permettant potentiellement le passage d'un courant de l'une à l'autre.

Le contrôleur utilisé est conventionnellement un contrôleur à puces avec convertisseurs et multiplexeurs intégrés et permettant la détection de l'appui ainsi que la détermination des coordonnées de l'appui (prises sur deux axes de référence de la dalle tactile résistive).

Cette solution conventionnelle a pour inconvénient d'engendrer des coûts importants de fabrication et une validation de couples de coordonnées ($X_n$, $Y_n$) ne correspondant pas toujours à un contact entre les deuxième **12** et quatrième **14** couches de la dalle **1** tactile résistive, ou qui ne sont pas corrélés temporellement aux appuis détectés et auxquels ils sont associés, car ces contrôleurs détectent d'abord s'il y a appui, puis déterminent les coordonnées ($X_n$, $Y_n$).

Les coordonnées de l'appui sont mesurées après polarisations successives des deuxième **12** et quatrième **14** couches de la dalle **1** tactile résistive entre une masse et un potentiel de référence $V_{réf}$.

Un exemple de détermination des coordonnées **X**, **Y** et de détection de l'appui **A** conforme à ce qui est réalisé dans l'état de la technique est décrit ci-après en référence aux figures 2a, 2b et 3. Dans cet exemple, la deuxième couche **12** de la dalle **1** tactile résistive possède des bornes parallèles **X+** et **X-**, la quatrième couche **14** de la dalle **1** tactile résistive possède des bornes parallèles **Y**+ et **Y**- orthogonales aux bornes **X+** et **X-** de la deuxième couche **12.**

La coordonnée **X** (abscisse) est mesurée en polarisant la deuxième couche **12** de la dalle **1** tactile résistive entre la tension de référence $V_{réf}$ et la masse, par exemple en reliant la borne **X**- à la masse et la borne **X+** à la tension de référence $V_{réf}$. Une tension **Vx** est ensuite mesurée entre la borne **Y**+ de la quatrième couche **14** et la masse (ou entre la borne **Y**- de la quatrième couche **14** et la masse). La coordonnée **X** est obtenue par la formule:

$$X = 100 \frac{Vx}{V_{réf}}.$$

La coordonnée **Y** (ordonnée) est mesurée en polarisant la quatrième couche **14** de la dalle **1** tactile résistive entre la tension de référence $V_{réf}$ et la masse, par exemple en reliant la borne **Y-** à la masse et la borne **Y+** à la tension de référence $V_{réf}$. Une tension **Vy** est ensuite mesurée entre la borne **X+** de la deuxième couche **12** et la masse (ou entre la borne **X-** de la deuxième couche **12** et la masse). La coordonnée **Y** est obtenue par la formule :

$$Y = 100 \frac{Vy}{V_{réf}}.$$

Les coordonnées **X** et **Y** ne sont validées que s'il y a contact entre les **d**euxième **12** et quatrième **14** couches. Dans le cas contraire, les déterminations de **X** et de **Y** ne sont dues qu'à des paramètres parasites existant entre ces deux couches **12** et **14** (ayant pour cause, par exemple les résistances de fuite, les capacités inter-couches pouvant exister, l'impédance du circuit de polarisation et de lecture, etc.).

C'est pourquoi, une information **A** d'appui doit être fournie par le contrôleur de manière à valider la détermination des coordonnées **X** et **Y**. L'information **A** d'appui est détectée de manière indépendante et préalablement aux deux déterminations de **X** et de **Y**. Pour cela, on réalise une mesure du type « tout ou rien » (encore dit mesure de type « bouton poussoir »), par exemple en reliant la borne **X-** à la masse et la borne **Y+** à une résistance **R,** elle-même reliée à la tension de référence $V_{réf}$ et une mesure de tension dite « appui » est faite entre la borne **Y+** et la borne **X-.** Si cette tension « appui » est inférieure à un seuil, alors il n'y a pas détection d'appui ; sinon, il y a détection d'appui.
Cette détection est temporellement indépendante des déterminations des coordonnées **X** et **Y.** Elle ne permet donc pas d'assurer complètement la validité du couple de coordonnées (**X**, **Y**).
Également, lors de glissés ou autres mouvements rapides de l'appui sur la dalle **1** tactile résistive certains couples de coordonnées (**X**, **Y**) sont validés alors même qu'ils sont erronés (c'est-à-dire que le couple de coordonnées ne correspond pas à une position effective de l'appui).
Ceci est dû au fait que lors du déplacement de l'appui, cet appui peut être relâché (l'opérateur lève son doigt ou le stylet) ; il y a un effet de rebond lors du déplacement. Ce phénomène augmente avec la vitesse de déplacement de l'appui. La détection de l'appui **A** est réalisée à un instant **t** alors que les déterminations des coordonnées **X** et **Y** subséquentes à la détection de l'appui **A** sont réalisées après un temps **t**+**dt** alors même que l'appui a été relâché.
WO 02/03 368 décrit un procédé pour la détermination et la validation de coordonnées d'appui sur une dalle tactile. Ce procédé consiste à comparer une différence d'abscisses obtenues successivement à un premier seuil et une différence d'ordonnées obtenues successivement à un deuxième seuil. Les coordonnées sont considérées comme valides quand les différences sont inférieures aux seuils. Les coordonnées sont considérées comme invalides quand les différences sont supérieures aux seuils.
EP 1 411 420 décrit un procédé pour détecter des coordonnées d'appui sur une dalle tactile.

Présentation de l'invention

L'invention se propose de palier au moins un des inconvénients de l'état de la technique exposés ci-dessus.
Pour cela, l'invention propose un procédé de validation et d'élimination de données de coordonnées déterminées pour dalle tactile résistive dans un environnement automobile lorsqu'un opérateur exerce et/ou déplace un appui sur la dalle tactile résistive, l'appui engendrant des couples de coordonnées, le procédé comprenant les étapes de :

- détermination d'un couple de coordonnées en cours ; et
- confirmation d'un couple de coordonnées en cours et de l'appui comme étant valides, à partir des couples de déterminations des coordonnées en cours et précédent ; caractérisé en ce que
  la détermination du couple de coordonnées est réalisée de manière à ce qu'en absence d'appui, les valeurs des coordonnées passent d'un minimum à un maximum et *vice et versa* d'une détermination à une autre subséquente. Un avantage de ce procédé est de proposer une solution utilisable en environnement automobile avec une interface homme-machine et des effets graphiques interactifs améliorés.

Cette solution permet également de réduire le coût de fabrication, augmenter la longévité, la qualité et la tenue environnementale (c'est-à-dire qu'elle permet un fonctionnement pérenne dans l'environnement automobile).

Un autre avantage de ce procédé est qu'il permet d'éliminer les déterminations de couples de coordonnées erronés ne correspondant à aucun appui effectif, ou correspondant à une situation où l'appui est relâché de manière momentanée.

D'autres caractéristiques optionnelles et non limitatives de ce procédé sont :

- l'appui est validé s'il y a au moins trois confirmations successives de l'appui et éliminé sinon ;
- les couples de coordonnées correspondent à des abscisses et ordonnées suivant deux axes de référence de la dalle tactile résistive ; et dans lequel l'étape de confirmation de l'appui comprend la sous-étape d'acceptation de l'appui consistant à comparer la valeur absolue de la différence entre les abscisses de deux couples de coordonnées successifs et la valeur absolue de la différence entre les ordonnées des deux couples de coordonnées successifs à un seuil d'acceptation de l'appui, l'appui étant accepté si ces valeurs absolues sont inférieures au seuil d'acceptation de l'appui ;
- les couples de coordonnées correspondent à des abscisses et ordonnées suivant deux axes de référence de la dalle tactile résistive ; et dans lequel l'étape de confirmation de l'appui comprend la sous-étape de confirmation de maintien de l'appui consistant à comparer la valeur absolue de la différence entre les abscisses de deux couples de coordonnées successifs et la valeur absolue de la différence entre les ordonnées des deux couples de coordonnées successifs à un seuil de maintien de l'appui, le maintien étant confirmé si ces valeurs absolues sont inférieures au seuil de maintien de l'appui ;

- les déterminations des couples de coordonnées sont effectuées grâce à un modulateur comprenant quatre condensateurs qui sont soit chargés soit déchargés avant chaque détermination, leur état chargé ou déchargé étant alterné d'une détermination à une autre subséquente pour que les deux déterminations consécutives des couples de coordonnées passent, en l'absence d'appui, d'un minimum à un maximum et vice et versa, et dans lequel :

   ■ un premier condensateur est relié à une première borne de potentiel électrique élevé d'une résistance de la dalle tactile résistive permettant la détermination des ordonnées ;
   ■ un deuxième condensateur est relié à une deuxième borne de potentiel électrique bas de la résistance de la dalle tactile résistive permettant la détermination des ordonnées ;
   ■ un troisième condensateur est relié à une première borne de potentiel électrique élevé d'une résistance de la dalle tactile résistive permettant la détermination des abscisses ;
   ■ un quatrième condensateur est relié à une deuxième borne de potentiel électrique bas de la résistance de la dalle tactile résistive permettant la détermination des abscisses ;
   l'autre borne des condensateurs étant reliée à la masse ;

   - le modulateur comprend en plus quatre transistors chacun étant relié à un condensateur différent, la charge à environ Vref des condensateurs étant obtenue en bloquant deux premiers transistors et en saturant les deux autres transistors la décharge des condensateurs étant obtenue en saturant les deux premiers transistors et en bloquant les deux autres transistors ;
   - l'abscisse est obtenue par la formule suivante :

$$X_n = 100 \frac{(MES\_Y+)_n + (MES\_Y-)_n - 2(MES\_X-)_n}{2(MES\_X+)_n - 2(MES\_X-)_n} \; ;$$

et l'ordonnée par la formule suivante :

$$Y_n = 100 \frac{(MES\_X+)_n + (MES\_X-)_n - 2(MES\_Y-)_n}{2(MES\_Y+)_n - 2(MES\_Y-)_n} \; ;$$

dans lesquelles :

   ■ $MES\_Y+$ est le potentiel électrique aux bornes du premier condensateur ;
   ■ $MES\_Y-$ est le potentiel électrique aux bornes du deuxième condensateur ;
   ■ $MES\_X+$ est le potentiel électrique aux bornes du troisième condensateur ; et
   ■ $MES\_X-$ est le potentiel électrique aux bornes du quatrième condensateur.

L'invention propose également un dispositif à dalle tactile résistive pour la validation et l'élimination de données de coordonnées déterminées dans un environnement automobile lorsqu'un opérateur exerce et/ou déplace un appui sur une dalle tactile résistive, le dispositif comprenant :

- une dalle tactile résistive ;
- un modulateur connecté à la dalle tactile résistive ; et
- un microcontrôleur connecté au modulateur ;
  le microcontrôleur comprenant :
- un déterminateur de couple de coordonnées ; et
- un confirmateur de coordonnées et d'appui valide, à partir des coordonnées en cours et précédentes fournies par le déterminateur ; caractérisé en ce que le microcontrôleur comprend en outre
- un alternateur pour alterner les valeurs des coordonnées entre un minimum et un maximum et *vice et versa* d'une détermination à une autre subséquente, lorsqu'il n'y a pas d'appui.

D'autres caractéristiques optionnelles et non limitatives du dispositif sont :

- le microcontrôleur comprend en outre au moins un comparateur adapté pour :

  ■ comparer la valeur absolue de la différence entre les abscisses de deux couples de coordonnées successifs et la valeur absolue de la différence entre les ordonnées des deux couples de coordonnées successifs à un seuil d'acceptation de l'appui ; et/ou
  ■ comparer la valeur absolue de la différence entre les abscisses des deux couples de coordonnées successifs et la valeur absolue de la différence entre les ordonnées des deux couples de coordonnées successifs à un seuil de maintien de l'appui ;
  le(s) résultat(s) étant envoyé(s) au confirmateur pour confirmer ou non l'appui ; et

- le modulateur comprend :

  ■ un premier condensateur relié à une première borne de potentiel électrique élevé d'une résistance de la dalle tactile résistive permettant la détermination des ordonnées ;
  ■ un deuxième condensateur relié à une deuxième borne de potentiel électrique bas de la résistance de la dalle tactile résistive permettant la détermination des ordonnées ;
  ■ un troisième condensateur relié à une première borne de potentiel électrique élevé d'une résistance de la dalle tactile résistive permettant la détermination des abscisses ;
  ■ un quatrième condensateur relié à une deuxième borne de potentiel électrique bas de la résistance de la dalle tactile résistive permettant la détermination des abscisses ;
  l'autre borne des condensateurs étant reliée à la masse ;
  et dans lequel l'alternateur du microcontrôleur envoie des signaux de commande au modulateur afin de charger ou décharger les condensateurs pour alterner les valeurs des coordonnées entre un minimum et un maximum et *vice et versa* d'une détermination à une autre subséquente, lorsqu'il n'y a pas d'appui.

Présentation des figures

D'autres caractéristiques, objectifs et avantages apparaîtront à la lecture de la description détaillée qui suit, en référence aux dessins donnés à titre illustratif et non limitatif, parmi lesquels :

- la figure 1 représente de manière schématique une coupe transversale d'une dalle tactile résistive avec appui ;
- les figures 2a et 2b illustrent un exemple de connexion de bornes d'une dalle tactile résistive pour une détermination de coordonnées d'un appui sur cette dalle tactile selon la figure 1 ;
- la figure 3 illustre un exemple de connexion des bornes d'une dalle tactile résistive pour une détection d'un appui sur cette dalle tactile selon la figure 1 ;
- la figure 4 est un schéma électronique simplifié d'une dalle tactile résistive connectée à un modulateur utilisé pour mettre en oeuvre le procédé selon l'invention ;
- la figure 5 est un chronogramme illustrant les états en fonction du temps de commandes d'entrée du modulateur de la figure 4 selon un exemple de mise en oeuvre de l'invention ; et
- les figures 6a à 6h sont des schémas électroniques simplifiés illustrant différentes étapes du procédé selon un exemple de mise en oeuvre de l'invention.

Description détaillée de l'invention

*Procédé*

Le procédé de validation et d'élimination de détermination de données de coordonnées pour une dalle tactile résistive dans un environnement automobile est décrit ci-après.

Lorsqu'un opérateur exerce et/ou déplace un appui sur la dalle tactile résistive, l'appui engendre des couples de coordonnées $(\mathbf{X}_n, \mathbf{Y}_n)$.

Le procédé de validation et d'élimination de détermination de couples de coordonnées $(\mathbf{X}_n, \mathbf{Y}_n)$ comprend les étapes de :

- détermination d'un couple de coordonnées en cours $(\mathbf{X}_n, \mathbf{Y}_n)$;
  et
- confirmation de ce couple de coordonnées en cours $(\mathbf{X}_n, \mathbf{Y}_n)$ et de l'appui comme étant valides, à partir des déterminations des couples de coordonnées en cours $(\mathbf{X}_n, \mathbf{Y}_n)$ et précédent $(\mathbf{X}_{n-1}, \mathbf{Y}_{n-1})$.

Les couples de coordonnées $(\mathbf{X}_n, \mathbf{Y}_n)$ correspondent à des abscisses et ordonnées suivant deux axes de référence (*x*, *y*) de la dalle **1** tactile résistive.

La détermination du couple de coordonnées $(\mathbf{X}_n, \mathbf{Y}_n)$ est réalisée de manière à ce qu'en absence d'appui, les valeurs des coordonnées $(\mathbf{X}_n, \mathbf{Y}_n)$ passent d'un minimum à un maximum et *vice et versa* d'une détermination à une autre subséquente.

Les coordonnées $\mathbf{X}_n$ et $\mathbf{Y}_n$ sont mesurées en pourcentage et leur valeur est comprise entre 0 et 100 %.

Si la détermination du couple de coordonnées $(\mathbf{X}_n, \mathbf{Y}_n)$ n'est pas réalisée de cette manière, en absence d'appui, les coordonnées $\mathbf{X}_n$ et $\mathbf{Y}_n$ auraient des valeurs proches de 50 % (comme expliqué par la suite). Ainsi, les valeurs obtenues tendraient à faire croire à un appui au centre de la dalle tactile résistive. Il y aurait donc risque de validation de coordonnées ne correspondant à aucun appui.

L'alternance, en l'absence d'appui des valeurs des coordonnées d'une détermination à une autre d'un minimum, par exemple en dessous de 1 %, à un maximum, par exemple au-dessus de 99 %, permet de palier cet inconvénient.

En effet, en l'absence d'appui, et pour une détermination n, les valeurs des coordonnées $\mathbf{X}_n$ et $\mathbf{Y}_n$ sont minimales (respectivement maximales). Pour la détermination suivante n+1, les valeurs des coordonnées $\mathbf{X}_{n+1}$ et $\mathbf{Y}_{n+1}$ vont être maximales (respectivement minimales). On comprend donc que si d'une détermination à l'autre les valeurs des coordonnées passent d'une valeur inférieure à 1 % à une valeur supérieure à 99 % (respectivement d'une valeur supérieure à 99% à une valeur inférieure à 1%), l'appui détecté est erroné, c'est-à-dire qu'il ne s'agit pas d'un appui (il n'y a pas de contact entre les deuxième **12** et quatrième **14** couches de la dalle **1** tactile résistive) ou que l'appui détecté ne correspond pas à ces couples de coordonnées (par exemple au début de l'appui, lors de relâché de l'appui ou un déplacement de l'appui trop rapide).

Lors de l'étape de confirmation de l'appui, la valeur absolue $|\mathbf{X}_{n+1} - \mathbf{X}_n|$ de la différence entre les abscisses de deux couples de coordonnées successifs et la valeur absolue $|\mathbf{Y}_{n+1} - \mathbf{Y}_n|$ de la différence entre les ordonnées des deux couples de coordonnées successifs sont comparées à un seuil $\mathbf{S}_{acc}$ d'acceptation de l'appui.

L'appui est accepté si ces différences sont inférieures au seuil $\mathbf{S}_{acc}$ d'acceptation de l'appui, c'est-à-dire si :

$$|\mathbf{X_{n+1}} - \mathbf{X_n}| < \mathbf{S_{acc}} \; ;$$

et

$$|\mathbf{Y_{n+1}} - \mathbf{Y_n}| < \mathbf{S_{acc}}.$$

Ainsi, lorsqu'il n'y a pas appui, les valeurs absolues $|\mathbf{X}_{n+1} - \mathbf{X}_n|$ et $|\mathbf{Y}_{n+1} - \mathbf{Y}_n|$ sont élevées, par exemple au-delà de 90 %. Le seuil $\mathbf{S}_{acc}$ peut être placé par exemple à 85 %. Par conséquent, à chaque fois qu'il n'y a pas appui, les couples ne sont pas validés et il est possible d'éliminer l'appui détecté de manière erronée. Si le seuil $\mathbf{S}_{acc}$ n'est placé plus haut que 85 %, c'est pour avoir la certitude d'éliminer tous les appuis détectés de manière erronée.

L'étape de confirmation de l'appui peut encore comprendre la sous-étape de confirmation de maintien de l'appui consistant à comparer la valeur absolue $|\mathbf{X}_{n+1} - \mathbf{X}_n|$ de la différence entre les abscisses des deux couples de coordonnées successifs et la valeur absolue $|\mathbf{Y}_{n+1} - \mathbf{Y}_n|$ de la différence entre les ordonnées de deux couples de coordonnées successifs à un seuil $\mathbf{S}_m$ de maintien de l'appui.

Le maintien étant confirmé si ces différences sont inférieures au seuil $S_m$ de maintien de l'appui, soit :

$$|X_{n+1} - X_n| < S_m \; ;$$

et

$$|Y_{n+1} - Y_n| < S_m.$$

Ces inéquations correspondent au cas où un appui est maintenu sur la dalle tactile résistive. Les valeurs des abscisses et des coordonnées de deux déterminations subséquentes sont donc très proches.

Le seuil de maintien de l'appui $S_m$ peut être par exemple choisi à 15 %. L'avantage de ne pas choisir ce seuil $S_m$ de maintien de l'appui proche de 0% permet de prendre en compte les déplacements de l'appui. Ainsi, plus le seuil $S_m$ de maintien de l'appui est petit et plus la vitesse de déplacement d'un appui doit être lente pour que le déplacement soit pris en compte. Si la vitesse de déplacement de l'appui est trop importante, les couples de coordonnées détectées seront considérés comme aberrants et leur détermination sera alors éliminée.

Plus le seuil $S_m$ de maintien de l'appui est grand et plus la vitesse de déplacement d'un appui peut être rapide ; les couples de coordonnées détectées ne seront pas considérés comme aberrants si le déplacement de l'appui ne dépasse pas une vitesse déterminée.

La vitesse maximale possible de déplacement est donc déterminée par la valeur du seuil $S_m$ de maintien de l'appui.

Afin d'éviter les phénomènes de rebond en début et fin d'appui (situation de relâchement par exemple), l'appui n'est validé que s'il y a au moins trois confirmations successives de l'appui (c'est-à-dire pour quatre déterminations $n$, $n+1$, $n+2$ et $n+3$ et comparaisons aux deux seuils des valeurs $|X_{n+1} - X_n|$, $|X_{n+2} - X_{n+1}|$, $|X_{n+3} - X_{n+2}|$, $|Y_{n+1} - Y_n|$, $|Y_{n+2} - Y_{n+1}|$, et $|Y_{n+3} - Y_{n+2}|$) et est éliminé sinon.

Ceci permet d'éliminer les couples d'entrée d'appui et de sortie d'appui qui ne sont pas toujours valides surtout en cas de déplacement avec rebond.

Également, on obtient alors une corrélation entre l'appui détecté et le couple de coordonnées $(X_n, Y_n)$ déterminé.

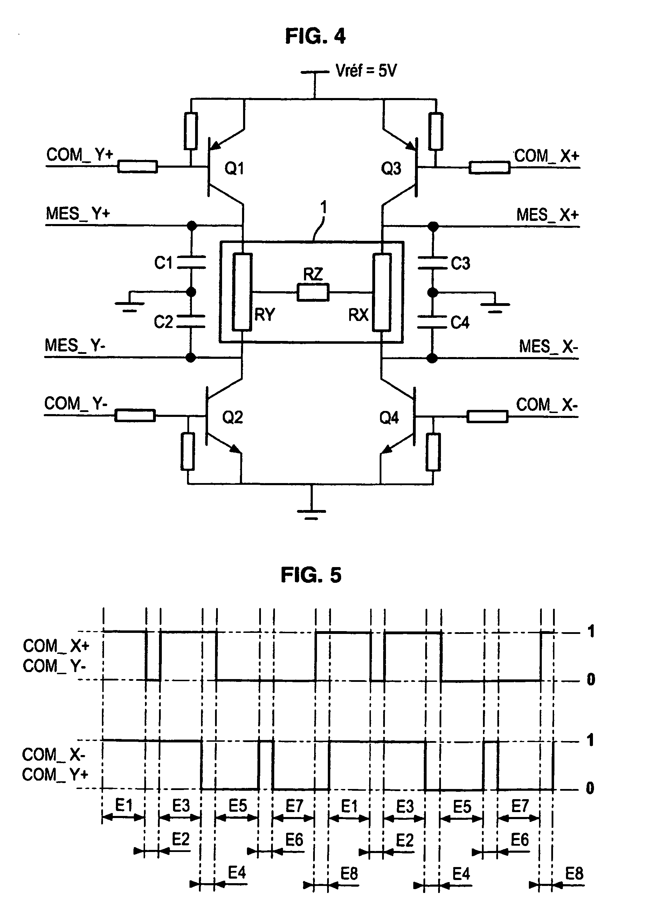

Une dalle **1** tactile résistive et un modulateur **2** pour la détermination des coordonnées sont décrits ci-après en référence à la figure **4**.

La dalle **1** tactile résistive peut être du type déjà décrit dans le préambule de la demande. Afin de simplifier l'exposé de l'invention, la dalle **1** tactile résistive est représentée par trois résistances **RX**, **RY** et **RZ** correspondant respectivement à des résistances des deuxième **12** et quatrième **14** couches de la dalle **1** tactile résistive et à une résistance de contact entre ces deux couches **12** et **14**. Les résistances **RX** et **RY** correspondent également à des axes de référence **x, y** de la dalle **1** tactile résistive.

Le modulateur **2** comprend quatre condensateurs **C1-4.**

Un premier condensateur **C1** (respectivement deuxième condensateur **C2)** est relié à une première borne de potentiel électrique élevé (respectivement bas) de la résistance **RY** de la dalle **1** tactile résistive permettant la détermination des ordonnées.

Un troisième condensateur **C3** (respectivement quatrième condensateur **C4)** est relié à une première borne de potentiel électrique élevé (respectivement bas) de la résistance **RX** de la dalle **1** tactile résistive permettant la détermination des abscisses.

L'autre borne des condensateurs **C1-4** est reliée à la masse. On appellera par la suite **MES_X+**$_n$, **MES_X-**$_n$, **MES_Y+**$_n$ **et MES_Y-**$_n$ les mesures des tensions respectives aux bornes des condensateurs **C3, C4, C1** et **C2** pour une détermination n.

Afin de permettre des déterminations de coordonnées dont la valeur est alternée entre un minimum et un maximum dans une situation sans appui, ces condensateurs **C1-4** sont soit chargés soit déchargés avant chaque détermination, leur état chargé ou déchargé étant alterné d'une détermination à une autre subséquente. C'est-à-dire que leur tension alternera entre une valeur proche de 0 V et une valeur proche de **V**$_{réf}$.

Le temps **T1** de charge et de décharge doit être suffisamment long, par exemple ce temps est pris supérieur à la valeur la plus grande entre $10 \cdot RX \cdot C$ et $10 \cdot RY \cdot C$, soit :

$$T1 \geq Max(10 \cdot RX \cdot C; 10 \cdot RY \cdot C) \; ;$$

où C est la valeur de la capacité identique des condensateurs **C1-4.**

Une autre possibilité est de choisir T1 tel que :

$$T1 = 10 \cdot C \cdot (RX + RY).$$

Ainsi, on est sûr d'obtenir des condensateurs **C1-4** déchargés à une tension d'environ 0 V ou chargés à une tension d'environ **V**réf.

Afin de charger et décharger ces condensateurs **C1-4,** le modulateur **2** peut comprendre en plus quatre transistors **Q1-4** chacun relié à un condensateur **C1-4** différent, la charge des condensateurs étant obtenue en bloquant deux premiers transistors et en saturant les deux autres transistors, la décharge des condensateurs étant obtenue en saturant les deux premiers transistors et en bloquant les deux autres.

Pour des raisons purement illustratives, les transistors **Q1-4** sont représentés sur la figure 4 comme des transistors bipolaires. L'homme du métier saura aisément remplacer ces transistors par d'autres types de commutateur pouvant avoir les mêmes fonctions. Le terme de « transistor » utilisé dans la description doit être compris comme incluant de manière plus générale le terme de « commutateur ». Par la suite, la description sera faite en référence à des transistors bipolaires, l'homme du métier saura adapter la description aux autres types de commutateur.

Un premier transistor **Q1** (respectivement troisième transistor **Q3**) est un transistor bipolaire PNP dont l'émetteur est lié à une tension de référence **V**réf, le collecteur au premier condensateur **C1** (respectivement troisième condensateur **C3**) et la base à une entrée de commande **COM_Y+** (respectivement **COM_X+**) du modulateur **2.**

Un deuxième transistor **Q2** (respectivement quatrième transistor **Q4**) est un transistor bipolaire NPN dont l'émetteur est lié à la masse, le collecteur au deuxième condensateur **C2** (respectivement quatrième condensateur **C4**) et la base à une entrée de commande **COM_Y-** (respectivement **COM_X-**) du modulateur **2.**

Les entrées de commande **COM_Y+, COM_Y-, COM_X+** et **COM_X-** prennent la valeur 1 ou 0.

Les valeurs des entrées de commande **COM_Y+, COM_Y-, COM_X+** et **COM_X-** sont contrôlés par un microcontrôleur. Le contrôle est possible grâce à une application électronique ou logiciel embarquée dans le microcontrôleur. Ce microcontrôleur peut également être utilisé pour le contrôle d'un éventuel écran TFT (ou transistor à couches minces) pour réduire encore le coût de fabrication.

Si l'entrée de commande **COM_X+** (respectivement **COM_Y+**) prend la valeur 1, le troisième transistor **Q3** (respectivement premier transistor **Q1**) est bloqué, sinon il est saturé.

Si l'entrée de commande **COM_X-** (respectivement **COM_Y-**) prend la valeur 0, le quatrième transistor **Q4** (respectivement deuxième transistor **Q2**) est bloqué, sinon il est saturé.

Afin de décharger les condensateurs **C1-4,** les entrées de commande **COM_Y+, COM_Y-, COM_X+** et **COM_ X-** prennent toutes la valeur 1. Ainsi, les premier et troisième transistors **Q1, Q3** sont bloqués et les deuxième et quatrième transistors **Q2** et **Q4** sont saturés.

Afin de charger à environ **Vref** les condensateurs **C1-4,** les entrées de commande **COM_Y+, COM_Y-, COM_ X+** et **COM_X-**prennent toutes la valeur 0. Ainsi, les premier et troisième transistors **Q1, Q3** sont saturés et les deuxième et quatrième transistors **Q2** et **Q4** sont bloqués.

Les déterminations des coordonnées sont effectuées après la décharge ou la charge des condensateurs **C1-4.**

*Détermination des coordonnées*

Afin de déterminer la coordonnée **X**n (respectivement la coordonnée **Y**n) les transistors **Q3** et **Q4** (respectivement **Q1** et **Q2**) sont saturés en portant **COM_X+** (respectivement **COM_Y+**) à **0** et **COM_X-** (respectivement **COM_ Y-**) à **1.** L'émetteur de **Q3** (respectivement **Q1**) est relié à une tension de référence **V**réf ; cela revient à appliquer la tension de référence **V**réf aux bornes de la résistance **RX** (respectivement **RY**), on parle alors de « polarisation de la résistance **RX** » (respectivement « polarisation de la résistance **RY** »). On mesure ensuite les tensions **MES_X+**n, **MES_ X-**n, **MES_Y+**n et **MES_Y-**n.

Théoriquement, la détermination de **X**n est obtenue par le calcul suivant :

$$X_{n,théo} = 100 \frac{MES\_Y+_n}{V_{réf}}.$$

Les tensions **V**sat de saturation des transistors **Q3** et **Q4** pouvant comportées des erreurs, afin de les éliminées, la

détermination de $X_n$ est obtenue par :

$$X_{n,1} = 100 \frac{(MES\_Y+)_n - (MES\_X-)_n}{(MES\_X+)_n - (MES\_X-)_n}.$$

**MES_X+**$_n$ intervenant au dénominateur permet d'éliminer l'erreur de la tension de saturation du transistor **Q3** et **MES_X-**$_n$ celle du transistor **Q4.**

Enfin, afin d'éliminer des déterminations erronées lors d'appuis multiples, pendant lesquels du courant circule dans **RY** impliquant **MES_Y+**$_n$ différent de **MES_Y-**$_n$, le calcul retenu prend en compte une moyenne des deux mesures **MES_Y+**$_n$ et **MES_Y-**$_n$, de manière à obtenir le barycentre des coordonnées **X**$_n$ de ces appuis :

$$X_n = 100 \frac{(MES\_Y+)_n + (MES\_Y-)_n - 2(MES\_X-)_n}{2(MES\_X+)_n - 2(MES\_X-)_n}.$$

De la même façon, la détermination de **Y**$_n$ est réalisée en saturant les transistors **Q1** et **Q2,** et en mesurant ensuite les tensions **MES_X+**$_n$, **MES_X-**$_n$, **MES_Y+**$_n$ et **MES_Y-**$_n$, pour obtenir **Y**$_n$ par la formule suivante :

$$Y_n = 100 \frac{(MES\_X+)_n + (MES\_X-)_n - 2(MES\_Y-)_n}{2(MES\_Y+)_n - 2(MES\_Y-)_n}.$$

Le temps **T2** minimum à respecter entre une polarisation de la résistance **RX** ou celle de la résistance **RY** et la mesure des tensions **MES_X+**$_n$, **MES_X-**$_n$, **MES_Y+**$_n$ et **MES_Y-**$_n$ aux bornes des condensateurs **C1-4** est :

$$\mathbf{T2 = 10 \cdot C \cdot (RX + RY + RZ).}$$

On comprendra mieux pourquoi, comme indiqué plus haut, si les valeurs des coordonnées **X**$_n$ et **Y**$_n$ ne sont pas alternées entre un minimum et un maximum lors d'absence d'appui, leur valeur est proche de 50 %.

Ceci venant du fait que les deuxième **12** et quatrième **14** couches de résistances équivalentes **RX** ou **RY** de la dalle **1** tactile résistive, sont polarisées alternativement pour la détermination de **X** ou de **Y**. Cet état électrique reste « mémorisé » dans les deux condensateurs, respectivement **C3, C4** ou **C1, C2**, à la suite de cette polarisation ; les 4 transistors **Q1-4** étant « bloqués » et les deuxième **12** et quatrième **14** couches n'étant pas en contact.

Les tensions **MES_Y+**$_n$, **MES_Y-**$_n$ ou **MES_X+**$_n$, **MES_X-**$_n$ aux bornes des condensateurs respectifs **C1-4** s'équilibrent autour de la valeur moyenne soit environ :

$$\frac{V_{réf}}{2}.$$

C'est pourquoi la détermination des coordonnées donne environ 50 % dans le cas où il n'y a pas d'appui sur la dalle 1 tactile résistive, surtout après moyenne des deux mesures **MES_Y+**$_n$, **MES_Y-**$_n$ ou **MES_X+**$_n$, **MES_X-**$_n$ comme expliqué précédemment.

Ceci ne se produit pas quand il y a appui grâce à la résistance de contact **RZ.** Dans ce cas, lors de la détermination de **X**$_n$ (respectivement **Y**$_n$), les condensateurs **C1** et **C2** (respectivement **C3** et **C4**) se chargeront à la valeur de tension

$$X_n \cdot \frac{V_{réf}}{100} \quad \text{(respectivement } Y_n \cdot \frac{V_{réf}}{100}$$

*Exemple de fonctionnement*

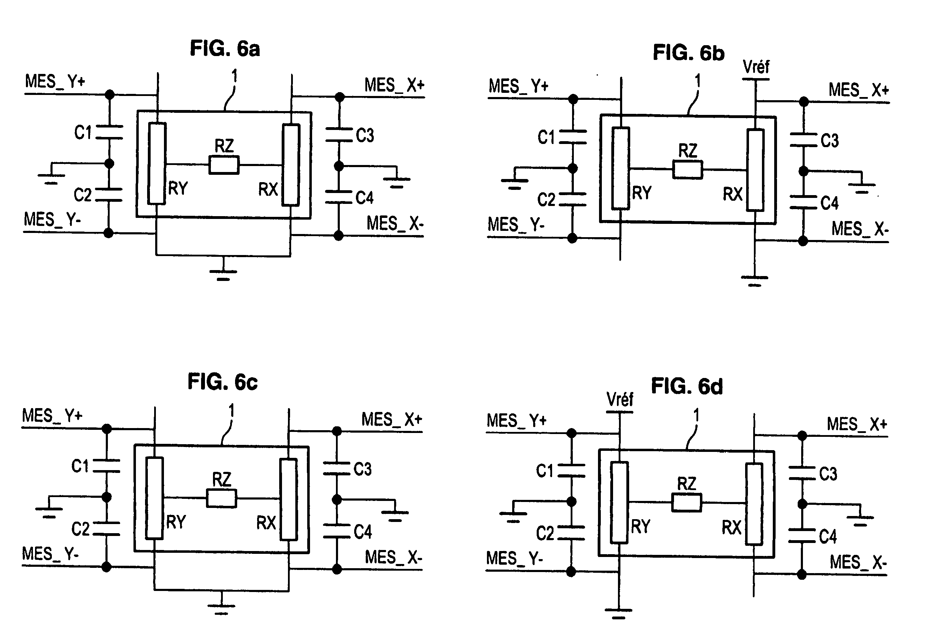

Une séquence de deux déterminations **n** et **n+1** de couples ($X_n$, $Y_n$) et ($X_{n+1}$, $Y_{n+1}$) est décrite ci-après en référence aux figures 5 et 6a-h.

■ *Détermination n*

Dans une première étape **E1** (figure 6a), les condensateurs **C1-4** sont déchargés. Pour cela, les entrées de commande **COM_Y+, COM_Y-, COM_X+** et **COM_X-** prennent toutes la valeur 1.

Dans une deuxième étape **E2** (figure 6b), l'abscisse $X_n$ est déterminée. Pour cela, la résistance **RX** de la dalle tactile **résistive** est polarisée en choisissant :

- **COM_X+** = 0, transistor **Q3** saturé ;
- **COM_X-** = 1, transistor **Q4** saturé ;
- **COM_Y+** = 1, transistor **Q1** bloqué ;
- **COM_Y-** = 0, transistor **Q2** bloqué.

Les tensions **MES_Y+**$_n$, **MES_Y-**$_n$, **MES_X+**$_n$ et **MES_X-**$_n$ sont mesurées et on obtient $X_n$ par la formule :

$$X_n = 100 \frac{(MES\_Y+)_n + (MES\_Y-)_n - 2(MES\_X-)_n}{2(MES\_X+)_n - 2(MES\_X-)_n}.$$

Cette valeur de $X_n$ est comparée à la valeur de l'abscisse précédente $X_{n-1}$ et les comparaisons aux différents seuils sont réalisées.

Dans une troisième étape E3 (figure 6c), les condensateurs **C1-4** sont déchargés. Pour cela, les entrées de commande **COM_Y+, COM_Y-, COM_X+** et **COM_X-** prennent toutes la valeur 1.

Dans une quatrième étape **E4** (figure 6d), l'ordonnée $Y_n$ est déterminée. Pour cela, la résistance **RY** de la dalle tactile résistive est polarisée en choisissant :

- **COM_X+** = 1, transistor **Q3** bloqué ;
- **COM_X-** = 0, transistor **Q4** bloqué ;
- **COM_Y+** = 0, transistor **Q1** saturé ;
- **COM_Y-** = 1, transistor **Q2** saturé.

Les tensions **MES_Y+**$_n$, **MES_Y-**$_n$, **MES_X+**$_n$, et **MES_X-**$_n$ sont mesurées et on obtient $Y_n$ par la formule :

$$Y_n = 100 \frac{(MES\_X+)_n + (MES\_X-)_n - 2(MES\_Y-)_n}{2(MES\_Y+)_n - 2(MES\_Y-)_n}.$$

Cette valeur de $Y_n$ est comparée à la valeur de l'ordonnée précédente $Y_{n-1}$ et les comparaisons aux différents seuils sont réalisées.

■ *Détermination **n+1***

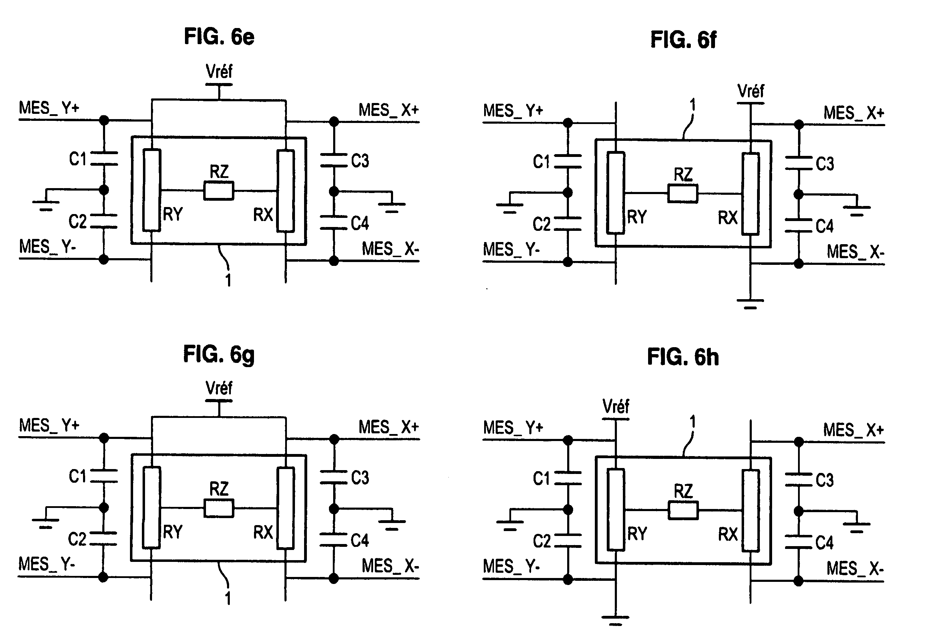

Dans une cinquième étape **E5** (figure 6e), les condensateurs **C1-4** sont chargés à environ **Vref.** Pour cela, les entrées de commande **COM_Y+, COM_Y-, COM_X+** et **COM_X-** prennent toutes la valeur 0.

Dans une sixième étape **E6** (figure 6f), l'abscisse $X_n$ est déterminée. Pour cela, la résistance **RX** de la dalle tactile résistive est polarisée en choisissant :

- **COM_X+** = 0, transistor **Q3** saturé ;
- **COM_X-** = 1, transistor **Q4** saturé ;
- **COM_Y+** = 1, transistor **Q1** bloqué ;
- **COM_Y-** = 0, transistor **Q2** bloqué.

Les tensions **MES_Y+**n+1, **MES_Y-**$_{n+1}$, **MES_X+**$_{n+1}$ et MES_X-$_{n+1}$ sont mesurées et on obtient $X_{n+1}$ par la formule :

$$X_{n+1} = 100 \frac{(MES\_Y+)_{n+1} + (MES\_Y-)_{n+1} - 2(MES\_X-)_{n+1}}{2(MES\_X+)_{n+1} - 2(MES\_X-)_{n+1}}.$$

Cette valeur de $X_{n+1}$ est comparée à la valeur de l'abscisse précédente $X_n$ et les comparaisons aux différents seuils sont réalisées.

Dans une septième étape **E7** (figure 6g), les condensateurs **C1-4** sont chargés à environ **Vref.** Pour cela, les entrées de commande **COM_Y+, COM_Y-, COM_X+** et **COM_X-** prennent toutes la valeur 0.

Dans une huitième étape **E8** (figure 6h), l'ordonnée $Y_n$ est déterminée. Pour cela, la résistance **RY** de la dalle tactile résistive est polarisée en choisissant :

- **COM_X+** = 1, transistor **Q3** bloqué ;
- **COM_X-** = 0, transistor **Q4** bloqué ;
- **COM_Y+** = 0, transistor **Q1** saturé ;
- **COM_Y-** = 1, transistor **Q2** saturé.

Les tensions **MES_Y+**$_{n+1}$, **MES_Y-**$_{n+1}$, **MES-X+**$_{n+1}$, et **MES_X-**$_{n+1}$ sont mesurées et on obtient $Y_{n+1}$ par la formule :

$$Y_{n+1} = 100 \frac{(MES\_X+)_{n+1} + (MES\_X-)_{n+1} - 2(MES\_Y-)_{n+1}}{2(MES\_Y+)_{n+1} - 2(MES\_Y-)_{n+1}}.$$

Cette valeur de $Y_{n+1}$ est comparée à la valeur de l'ordonnée précédente $Y_n$ et les comparaisons aux différents seuils sont réalisées.

Cette séquence est par la suite réitérée.

On remarquera l'entrelacement des déterminations des abscisses $X_n$ et des ordonnées $Y_n$. Ceci permet d'obtenir les valeurs de $X_n$ et $Y_n$ de manière successive et les plus proches possibles temporellement.

*Dispositif*

L'invention concerne également un dispositif à dalle **1** tactile résistive pour la validation et l'élimination de détermination de données de coordonnées dans un environnement automobile lorsqu'un opérateur exerce et/ou déplace un appui sur une dalle **1** tactile résistive.

Le dispositif comprend :

- une dalle **1** tactile résistive;
- un modulateur **2** connecté à la dalle **1** tactile résistive; et
- un microcontrôleur connecté au modulateur **2.**

Le microcontrôleur comprend :

- un déterminateur de couples de coordonnées ($X_n$, $Y_n$) ; et
- un confirmateur de coordonnées $X_n$, $Y_n$ et d'appui valide, à partir des coordonnées en cours $X_n$, $Y_n$ et précédentes $X_{n-1}$, $Y_{n-1}$ fournies par le déterminateur ;
- un alternateur pour alterner les valeurs des coordonnées ($X_n$, $Y_n$) entre un minimum et un maximum et *vice et versa* d'une détermination à une autre subséquente, lorsqu'il n'y a pas d'appui. Le microcontrôleur peut comprendre en outre au moins un comparateur adapté pour :
- comparer la valeur absolue $|X_{n+1} - X_n|$ de la différence entre les abscisses de deux couples de coordonnées ($X_n$, $Y_n$), ($X_{n+1}$, $Y_{n+1}$) successifs et la valeur absolue $|Y_{n+1} - Y_n|$ de la différence entre les ordonnées des deux couples de coordonnées ($X_n$, $Y_n$), ($X_{n+1}$, $Y_{n+1}$) successifs à un seuil $S_{acc}$ d'acceptation de l'appui ; et/ou
- comparer la valeur absolue $|Xn_{+1} - X_n|$ de la différence entre les abscisses des deux couples de coordonnées ($X_n$, $Y_n$), ($X_{n+1}$, $Y_{n+1}$) successifs et la valeur absolue $|Y_{n+1} - Y_n|$ de la différence entre les ordonnées des deux couples

11

de coordonnées ($X_n$, $Y_n$), ($X_{n+1}$, $Y_{n+1}$) successifs à un seuil $S_m$ de maintien de l'appui.

Le ou les résultat(s) est/sont envoyé(s) au confirmateur pour confirmer ou non l'appui.

Le modulateur **2** peut être un modulateur tel que décrit ci-dessus.

Le microcontrôleur envoie les signaux **COM_X+, COM_X-, COM_Y+** et **COM_Y-** de commande au modulateur **2** afin de charger ou décharger les condensateurs **C1-4** pour alterner les valeurs des coordonnées ($X_n$, $Y_n$) entre un minimum et un maximum et *vice et versa* d'une détermination à une autre subséquente, lorsqu'il n'y a pas d'appui.

Par exemple, ces signaux **COM_X+, COM_X-, COM_Y+** et **COM_Y-** de commande permettent de saturer ou de bloquer des transistors **Q1-4** du modulateur **2**.

## Revendications

1. Procédé de validation et d'élimination de données de coordonnées déterminées pour dalle (1) tactile résistive dans un environnement automobile lorsqu'un opérateur exerce et/ou déplace un appui sur la dalle (1) tactile résistive, l'appui ainsi que l'absence d'appui engendrant des couples de coordonnées ($X_n$, $Y_n$), le procédé comprenant les étapes de :

   - détermination d'un couple de coordonnées en cours ($X_n$, $Y_n$); et
   - confirmation d'un couple de coordonnées en cours ($X_n$, $Y_n$) et de l'appui comme étant valides, à partir des couples de déterminations des coordonnées en cours ($X_n$, $Y_n$) et précédent ($X_{n-1}$, $Y_{n-1}$) ; caractérisé en ce que

   la détermination du couple de coordonnées est réalisée de manière à ce qu'en absence d'appui, les valeurs des coordonnées ($X_n$, $Y_n$) passent d'un minimum à un maximum et *vice et versa* d'une détermination à une autre subséquente.

2. Procédé selon la revendication 1, dans lequel l'appui est validé s'il y a au moins trois confirmations successives de l'appui et éliminé sinon.

3. Procédé selon la revendication 1 ou 2, dans lequel les couples de coordonnées ($X_n$, $Y_n$) correspondent à des abscisses et ordonnées suivant deux axes de référence (*x, y*) de la dalle (1) tactile résistive ; et dans lequel l'étape de confirmation de l'appui comprend la sous-étape d'acceptation de l'appui consistant à comparer la valeur absolue ($|X_{n+1}, - X_n|$) de la différence entre les abscisses de deux couples de coordonnées ($X_n$, $Y_n$ ; $X_{n+1}$, $Y_{n+1}$) successifs et la valeur absolue ($|Y_{n+1} - Y_n|$) de la différence entre les ordonnées des deux couples de coordonnées ($X_n$, $Y_n$ ; $X_{n+1}$, $Y_{n+1}$) successifs à un seuil ($S_{acc}$) d'acceptation de l'appui, l'appui étant accepté si ces valeurs absolues sont inférieures au seuil ($S_{acc}$) d'acceptation de l'appui.

4. Procédé selon l'une des revendications 1 à 3, dans lequel les couples de coordonnées ($X_n$, $Y_n$) correspondent à des abscisses et ordonnées suivant deux axes de référence (*x, y*) de la dalle (1) tactile résistive ; et dans lequel l'étape de confirmation de l'appui comprend la sous-étape de confirmation de maintien de l'appui consistant à comparer la valeur absolue ($|X_{n+1} - X_n|$) de la différence entre les abscisses de deux couples de coordonnées ($X_n$, $Y_n$ ; $X_{n+1}$, $Y_{n+1}$) successifs et la valeur absolue ($|Y_{n+1} - Y_n|$) de la différence entre les ordonnées des deux couples de coordonnées ($X_n$, $Y_n$ ; $X_{n-1}$, $Y_{n+1}$) successifs à un seuil ($S_m$) de maintien de l'appui, le maintien étant confirmé si ces valeurs absolues sont inférieures au seuil ($S_m$) de maintien de l'appui.

5. Procédé selon l'une des revendications 1 à 4, dans lequel les déterminations des couples de coordonnées sont effectuées grâce à un modulateur comprenant quatre condensateurs (C1-4) qui sont soit chargés soit déchargés avant chaque détermination, leur état chargé ou déchargé étant alterné d'une détermination à une autre subséquente pour que les deux déterminations consécutives des couples de coordonnées passent, en l'absence d'appui, d'un minimum à un maximum et vice et versa, et dans lequel :

   - un premier condensateur (C1) est relié à une première borne de potentiel électrique élevé d'une résistance (RY) de la dalle (1) tactile résistive permettant la détermination des ordonnées ;
   - un deuxième condensateur (C2) est relié à une deuxième borne de potentiel électrique bas de la résistance (RY) de la dalle (1) tactile résistive permettant la détermination des ordonnées ;
   - un troisième condensateur (C3) est relié à une première borne de potentiel électrique élevé d'une résistance (RX) de la dalle (1) tactile résistive permettant la détermination des abscisses ;
   - un quatrième condensateur (C4) est relié à une deuxième borne de potentiel électrique bas de la résistance

(RX) de la dalle (1) tactile résistive permettant la détermination des abscisses ;
l'autre borne des condensateurs (C1-4) étant reliée à la masse.

**6.** Procédé selon la revendication 5, dans lequel le modulateur comprend en plus quatre transistors (Q1-4) chacun étant relié à un condensateur différent, la charge à environ Vref des condensateurs étant obtenue en bloquant deux premiers transistors (Q2, Q4) et en saturant les deux autres transistors (Q1, Q3), La décharge des condensateurs étant obtenue en saturant les deux premiers transistors (Q2, Q4) et en bloquant les deux autres transistors (Q1, Q3).

**7.** Procédé selon la revendication 5 ou 6, dans lequel, l'abscisse $X_n$ est obtenue par la formule suivante :

$$X_n = 100 \frac{(MES\_Y+)_n + (MES\_Y-)_n - 2(MES\_X-)_n}{2(MES\_X+)_n - 2(MES\_X-)_n} \ ;$$

et l'ordonnée $Y_n$ par la formule suivante :

$$Y_n = 100 \frac{(MES\_X+)_n + (MES\_X-)_n - 2(MES\_Y-)_n}{2(MES\_Y+)_n - 2(MES\_Y-)_n} \ ;$$

dans lesquelles :

- *MES_Y+* est le potentiel électrique aux bornes du premier condensateur (C1) ;
- *MES_Y-* est le potentiel électrique aux bornes du deuxième condensateur (C2) ;
- *MES_X+* est le potentiel électrique aux bornes du troisième condensateur (C3) ; et
- *MES_x-* est le potentiel électrique aux bornes du quatrième condensateur (C4).

**8.** Dispositif à dalle (1) tactile résistive pour la validation et l'élimination de données de coordonnées déterminées dans un environnement automobile lorsqu'un opérateur exerce et/ou déplace un appui sur une dalle (1) tactile résistive, l'appui ainsi que l'absence d'appui engendrant des couples de coordonnées $(x_n, y_n)$ le dispositif comprenant :

- une dalle (1) tactile résistive ;
- un modulateur (2) connecté à la dalle (1) tactile résistive ; et
- un microcontrôleur connecté au modulateur (2) ;

le microcontrôleur comprenant :

- un déterminateur de couple de coordonnées $(X_n, Y_n)$ ; et
- un confirmateur de coordonnées $(X_n, Y_n)$ et d'appui valide, à partir des coordonnées en cours $(X_n, Y_n)$ et précédentes $(X_{n-1}, Y_{n-1})$ fournies par le déterminateur ; **caracterisé en ce que** le microcontrôleur comprend en outre.
- un alternateur pour alterner les valeurs des coordonnées $(X_n, Y_n)$ entre un minimum et un maximum et *vice et versa* d'une détermination à une autre subséquente, lorsqu'il n'y a pas d'appui.

**9.** Dispositif à dalle (1 ) tactile résistive selon la revendication 8, dans lequel le microcontrôleur comprend en outre au moins un comparateur adapté pour :

- comparer la valeur absolue $(|X_{n+1} - X_n|)$ de la différence entre les abscisses de deux couples de coordonnées $(X_n, Y_n ; X_{n+1}, Y_{n-1})$ successifs et la valeur absolue $(|Y_{n+1} - Y_n|)$ de la différence entre les ordonnées des deux couples de coordonnées $(X_n, Y_n ; X_{n+1}, Y_{n+1})$ successifs à un seuil $(S_{acc})$ d'acceptation de l'appui ; et/ou
- comparer la valeur absolue $(|X_{n+1} - X_n|)$ de la différence entre les abscisses des deux couples de coordonnées $(X_n, Y_n ; X_{n+1}, Y_{n+1})$ successifs et la valeur absolue $(|Y_{n+1} - Y_n|)$ de la différence entre les ordonnées des deux couples de coordonnées $(X_n, Y_n ; X_{n+1}, Y_{n+1})$ successifs à un seuil $(S_m)$ de maintien de l'appui ;

le(s) résultat(s) étant envoyé(s) au confirmateur pour confirmer ou non l'appui.

**10.** Dispositif à dalle (1) tactile résistive selon la revendication 8 ou 9, dans lequel le modulateur (2) comprend :

- un premier condensateur (C1) relié à une première borne de potentiel électrique élevé d'une résistance (RY) de la dalle (1) tactile résistive permettant la détermination des ordonnées ;
- un deuxième condensateur (C2) relié à une deuxième borne de potentiel électrique bas de la résistance (RY) de la dalle (1) tactile résistive permettant la détermination des ordonnées ;
- un troisième condensateur (C3) relié à une première borne de potentiel électrique élevé d'une résistance (RX) de la dalle (1) tactile résistive permettant la détermination des abscisses ;
- un quatrième condensateur (C4) relié à une deuxième borne de potentiel électrique bas de la résistance (RX) de la dalle (1) tactile résistive permettant la détermination des abscisses ;

l'autre borne des condensateurs (C1 -4) étant reliée à la masse ; et dans lequel l'alternateur du microcontrôleur envoie des signaux (COM_X+, COM_X-, COM_Y+ et COM_Y-) de commande au modulateur (2) afin de charger ou décharger les condensateurs (C1-4) pour alterner les valeurs des coordonnées ($X_n$, $Y_n$) entre un minimum et un maximum et *vice et versa* d'une détermination à une autre subséquente, lorsqu'il n'y a pas d'appui.

**Claims**

**1.** A method for validating and discarding determined coordinate data for resistive touchscreen (1) in an automobile environment when an operator applies and/or moves a pressure on the resistive touchscreen (1), the application and non-application of the pressure generating pairs of coordinates ($X_n$, $Y_n$), the method comprising the steps of:

- determining a pair of current coordinates ($X_n$, $Y_n$) ; and
- confirming a pair of current coordinates ($X_n$, $Y_n$) and the pressure as being valid, on the basis of the pairs of determinations of current coordinates ($X_n$, $X_y$) and preceding coordinates ($X_{n-1}$, $Y_{n-1}$) ;

**characterized in that** the determination of the pair of coordinates is performed so that, in the absence of pressure, the values of the coordinates ($X_n$, $Y_n$) change from a minimum to a maximum and *vice versa* from one determination to a subsequent determination.

**2.** The method according to claim 1 wherein the pressure is validated if there are at least three successive confirmations of the pressure, otherwise it is discarded.

**3.** The method according to claim 1 or 2 wherein the pairs of coordinates ($X_n$, $Y_n$) correspond to abscissas and ordinates along two reference axes (x, y) of the resistive touchscreen (1); and wherein confirming the pressure comprises the sub-step of accepting the pressure, which consists of comparing the absolute value ($|X_{n+1} - X_n|$) of the difference between the abscissas of two successive pairs of coordinates ($X_n$, $Y_n$; $X_{n+1}$, $Y_{n+1}$) and the absolute value ($|Y_{n+1} - Y_n|$) of the difference between the ordinates of the two successive pairs of coordinates ($X_n$, $Y_n$; $X_{n+1}$, $Y_{n+1}$) with a pressure acceptance threshold ($S_{acc}$), the pressure being accepted if these absolute values are lower than the pressure acceptance threshold ($S_{acc}$).

**4.** The method according to one of claims 1 to 3, wherein the pairs of coordinates ($X_n$, $Y_n$) correspond to abscissas and ordinates along two reference axes (x, y) of the resistive touchscreen (1); and wherein confirming the pressure comprises the sub-step of confirming maintained pressure, which consists of comparing the absolute value ($|X_{n+1} - X_n|$) of the difference between the abscissas of two successive pairs of coordinates ($X_n$, $Y_n$; $X_{n+1}$, $Y_{n+1}$) and the absolute value ($|Y_{n+1} - Y_n|$) of the difference between the ordinates of the two successive pairs of coordinates ($X_n$, $Y_n$; $X_{n+1}$, $Y_{n+1}$) with a maintained pressure threshold ($S_m$), the maintained pressure being confirmed if these absolute values are lower than the maintained pressure threshold ($S_m$).

**5.** The method according to one of claims 1 to 4 wherein the determinations of the pairs of coordinates are carried out by means of a modulator comprising four capacitors (C1-4) which are either charged or discharged before each determination, their charged or discharged status being alternated from one determination to a subsequent determination so that two consecutive determinations of the pairs of coordinates, if no pressure is applied, change from a minimum to a maximum and *vice versa,* and wherein:

- a first capacitor (C1) is connected to a first terminal at high electric potential of a resistance (RY) of the resistive touchscreen (1) allowing determination of the ordinates;

- a second capacitor (C2) is connected to a second terminal at low electric potential of the resistance (RY) of the restive touchscreen (1) allowing determination of the ordinates;
- a third capacitor (C3) is connected to a first terminal at high electric potential of a resistance (RX) of the resistive touchscreen (1) allowing determination of the abscissas;
- a fourth capacitor (C4) is connected to a second terminal at low electric potential of the resistance (RX) of the resistive touchscreen (1) allowing determination of the abscissas;

the other terminal of the capacitors (C1-4) being earthed.

6. The method according to claim 5 wherein the modulator further comprises four transistors (Q1-4) each being connected to a different capacitor, the charge at about Vref of the capacitors being obtained by blocking two first transistors (Q2, Q4) and by saturating the two other transistors (Q1, Q3), the discharge of the capacitors being obtained by saturating the two first transistors (Q2, Q4) and by blocking the two other transistors (Q1, Q3).

7. The method according to claim 5 or 6 wherein the abscissa $X_n$ is obtained by the following formula:

$$X_n = 100 \frac{(MES\_Y+)_n + (MES\_Y-)_n - 2(MES\_X-)_n}{2(MES\_X+)_n - 2(MES\_X-)_n} \quad ;$$

and the ordinate $Y_n$ by the following formula:

$$Y_n = 100 \frac{(MES\_X+)_n + (MES\_X-)_n - 2(MES\_Y-)_n}{2(MES\_Y+)_n - 2(MES\_Y-)_n} \quad ;$$

where:

- $MES\_Y+$ is the electric potential at the terminals of the first capacitor (C1);
- $MES\_Y-$ is the electric potential at the terminals of the second capacitor (C2);
- $MES\_X+$ is the electric potential at the terminals of the third capacitor (C3); and
- $MES\_X-$ is the electric potential at the terminals of the fourth capacitor (C4).

8. A device with resistive touch surface (1) for validating and discarding determined coordinate data in an automobile environment when an operator applies and/or moves a pressure on a resistive touchscreen (1), the application and the non-application of the pressure generating pairs of coordinates $(X_n, Y_n)$, the device comprising:

- a resistive touchscreen (1);
- a modulator (2) connected to the resistive touchscreen (1); and
- a microcontroller connected to the modulator (2);

the microcontroller comprising:

- a determiner of coordinate pairs $(X_n, Y_n)$; and
- a confirmer of coordinates $(X_n, Y_n)$ and valid pressure, based on the current coordinates $(X_n, Y_n)$ and preceding coordinates $(X_{n-1}, Y_{n-1})$ provided by the determiner;

**characterized in that** the microcontroller further comprises:

- an alternator to alternate the values of the coordinates $(X_n, Y_n)$ between a minimum and a maximum and *vice*

*versa* from one determination to a subsequent determination, when no pressure is applied.

9. The device with resistive touch surface (1) according to claim 8 wherein the microcontroller further comprises at least one comparator adapted to:

- compare the absolute value ($|x_{n+1} - X_n|$) of the difference between the abscissas of two successive pairs of coordinates ($X_n$, $Y_n$; $X_{n+1}$, $Y_{n+1}$) and the absolute value ($|Y_{n+1} - Y_n|$) of the difference between the ordinates of the two successive pairs of coordinates ($X_n$, $Y_n$; $X_{n+1}$, $Y_{n+1}$) with a pressure acceptance threshold ($S_{acc}$); and/or
- compare the absolute value ($|X_{n+1} - X_n|$) of the difference between the abscissas of the two successive pairs of coordinates ($X_n$, $Y_n$; $X_{n+1}$, $Y_{n+1}$) and the absolute value ($|Y_{n+1} - Y_n|$) of the difference between the ordinates of the two successive pairs of coordinates ($X_n$, $Y_n$; $X_{n+1}$, $Y_{n+1}$) with a maintained pressure threshold ($S_m$);

the result(s) being sent to the confirmer for pressure confirming or non-confirming.

10. The device with resistive touch surface (1) according to claim 8 or 9 wherein the modulator (2) comprises:

- a first capacitor (C1) connected to a first terminal at high electric potential of a resistance (RY) of the resistive touchscreen (1) allowing determination of the ordinates;
- a second capacitor (C2) connected to a second terminal at low electric potential of the resistance (RY) of the resistive touchscreen (1) allowing determination of the ordinates;
- a third capacitor (C3) connected to a first terminal at high electric potential of a resistance (RX) of the resistive touchscreen (1) allowing determination of the abscissas;
- a fourth capacitor (C4) connected to a second terminal at low electric potential of the resistance (RX) of the resistive touchscreen (1) allowing determination of the abscissas;

the other terminal of the capacitors (C1-4) being earthed;
and wherein the alternator of the microcontroller sends control signals (COM_X+, COM_X-, COM_Y+ and COM_Y-) to the modulator (2) so as to charge or discharge the capacitors (C1-4) to alternate the values of the coordinates ($X_n$, $Y_n$) between a minimum and a maximum and vice versa from one determination to a subsequent determination when no pressure is applied.

**Patentansprüche**

1. Verfahren zur Validierung und zum Ausschluss von ermittelten Koordinatendaten für eine resistive berührungsempfindliche Oberfläche (1) in einer automobilen Umgebung, wenn ein Benutzer einen Druck auf die resistive berührungsempfindliche Oberfläche ausübt und/oder verschiebt, wobei der Duck sowie die Abwesenheit eines Drucks Koordinatenpaare ($X_n$, $Y_n$) erzeugt, wobei das Verfahren die folgenden Schritte aufweist:

- Ermitteln eines aktuellen Koordinatenpaars ($X_n$, $Y_n$): und
- Bestätigen eines aktuellen Koordinatenpaars ($X_n$, $Y_n$) und des Drucks als gültig, ausgehend von den aktuell ($X_n$, $Y_n$) und vorausgehend ($X_{n-1}$, $Y_{n-1}$) ermittelten Koordinatenpaaren;

**dadurch gekennzeichnet, dass**
die Ermittlung des Koordinatenpaars derart erfolgt, dass bei Abwesenheit eines Drucks die Werte der Koordinaten ($X_n$, $Y_n$) von einer Ermittlung zur nächsten von einem Minimum zu einem Maximum gehen und vice versa.

2. Verfahren nach Anspruch 1, in welchem der Druck für gültig erklärt wird, wenn es mindestens drei aufeinanderfolgende Bestätigungen des Drucks gibt, und verworfen wird, wenn nicht.

3. Verfahren nach Anspruch 1 oder 2, in welchem die Koordinatenpaare ($X_n$, $Y_n$) Abszissenwerten und Ordinatenwerten entlang zweier Bezugsachsen (x, y) der resistiven berührungsempfindlichen Oberfläche (1) entsprechen; und in welchem der Schritt der Bestätigung des Drucks den Unterschritt des Akzeptierens des Drucks aufweist, der darin besteht, den Absolutbetrag ($|X_{n+1}-X_n|$) der Differenz zwischen den Abszissenwerten von zwei aufeinanderfolgenden Koordinatenpaaren ($X_n$, $Y_n$; $X_{n+1}$, $Y_{n+1}$) und den Absolutbetrag ($|Y_{n+1}-Y_n|$) der Differenz zwischen den Ordinatenwerten der zwei aufeinanderfolgenden Koordinatenpaare ($X_n$,$Y_n$;$X_{n+1}$, $Y_{n+1}$) mit einer Druckakzeptanzschwelle ($S_{acc}$) zu vergleichen, wobei der Druck akzeptiert wird, wenn diese Absolutbeträge die Druckakzeptanzschwelle ($S_{acc}$) unterschreiten.

**4.** Verfahren nach einem der Ansprüche 1 bis 3, in welchem die Koordinatenpaare $(X_n,Y_n)$ Abszissenwerten und Ordinatenwerten entlang zweier Bezugsachsen $(x,y)$ der resistiven berührungsempfindlichen Oberfläche (1) entsprechen; und in welchem der Schritt der Bestätigung des Drucks den Unterschritt der Bestätigung der Beibehaltung des Drucks aufweisen, der darin besteht, den Absolutbetrag $(|X_{n+1}-X_n|)$ der Differenz zwischen den Abszissenwerten von zwei aufeinanderfolgenden Koordinatenpaaren $(X_n,Y_n;X_{n+1},Y_{n+1})$ und den Absolutbetrag $(|Y_{n+1}-Y_n|)$ der Differenz zwischen den Ordinatenwerten der zwei aufeinanderfolgenden Koordinatenpaare $(X_n,Y_n;X_{n+1},Y_{n+1})$ mit einer Druckbeibehaltungsschwelle $(S_m)$ zu vergleichen, wobei der Druck akzeptiert wird, wenn diese Absolutbeträge die Druckbeibehaltungsschwelle $(S_m)$ unterschreiten.

**5.** Verfahren nach einem der Ansprüche 1 bis 4, in welchem die Ermittlung der Koordinatenpaare mit Hilfe eines Modulators erfolgt, der vier Kondensatoren (C1-C4) aufweist, die vor jeder Ermittlung entweder geladen oder entladen werden, wobei von einer Ermittlung zur nächsten ihr geladener oder entladener Zustand gewechselt wird, so dass die zwei aufeinanderfolgenden Ermittlungen der Koordinatenpaare bei Abwesenheit eines Drucks von einem Minimum zu einem Maximum gehen und vice versa, und in welchem:

- ein erster Kondensator (C1) mit einem auf hohem elektrischem Potential liegenden ersten Anschluss eines Widerstands (RY) der resistiven berührungsempfindlichen Oberfläche (1) verbunden ist und die Ermittlung der Ordinatenwerte erlaubt;
- ein zweiter Kondensator (C2) mit einem auf niedrigem elektrischem Potential liegenden zweiten Anschluss des Widerstands (RY) der resistiven berührungsempfindlichen Oberfläche (1) verbunden ist und die Ermittlung der Ordinatenwerte erlaubt;
- ein dritter Kondensator (C3) mit einem auf hohem elektrischem Potential liegenden ersten Anschluss eines Widerstands (RX) der resistiven berührungsempfindlichen Oberfläche (1) verbunden ist und die Ermittlung der Abszissenwerte erlaubt;
- ein vierter Kondensator (C4) mit einem auf niedrigem elektrischem Potential liegenden zweiten Anschluss des Widerstands (RX) der resistiven berührungsempfindlichen Oberfläche (1) verbunden ist und die Ermittlung der Abszissenwerte erlaubt;

der andere Anschluss der Kondensatoren (C1-C4) mit Masse verbunden ist.

**6.** Verfahren nach Anspruch 5, in welchem der Modulator außerdem vier Transistoren (Q1-Q4) aufweist, von denen jeder mit einem anderen Kondensator verbunden ist, wobei das Aufladen der Kondensatoren auf ungefähr Vref durch Sperren von zwei ersten Transistoren (Q2,Q4) und Sättigen der zwei anderen Transistoren (Q1,Q3) erfolgt und das Entladen der Kondensatoren durch Sättigen der zwei ersten Transistoren (Q2,Q4) und Sperren der zwei anderen Transistoren (Q1,Q3) erfolgt.

**7.** Verfahren nach Anspruch 5 oder 6, in welchem der Abszissenwert $X_n$ durch die folgende Formel gewonnen wird:

$$X_n = 100 \frac{(MES\_Y+)_n + (MES\_Y-)_n - 2\,(MES\_X-)_n}{2\,(MES\_X+)_n - 2\,(MES\_X-)_n}$$

und der Ordinatenwert $Y_n$ durch die folgende Formel gewonnen wird:

$$Y_n = 100 \frac{(MES\_X+)_n + (MES\_X-)_n - 2\,(MES\_Y-)_n}{2\,(MES\_Y+)_n - 2\,(MES\_Y-)_n}$$

in welchen:

- *MES_Y+* das elektrische Potential an den Anschlüssen des ersten Kondensators (C1) ist;
- *MES_Y-* das elektrische Potential an den Anschlüssen des zweiten Kondensators (C2) ist;

- *MES_X+* das elektrische Potential an den Anschlüssen des dritten Kondensators (C3) ist;
- *MES_X-* das elektrische Potential an den Anschlüssen des vierten Kondensators (C4) ist.

8. Resistive berührungsempfindliche Oberflächenvorrichtung (1) zur Validierung und zum Ausschluss von ermittelten Koordinatendaten im einer automobilen Umgebung, wenn ein Benutzer einen Druck auf eine resistive berührungsempfindliche Oberfläche ausübt und/oder verschiebt, wobei der Druck sowie die Abwesenheit von Druck Koordinatenpaare $(X_n, Y_n)$ erzeugt, wobei die Vorrichtung aufweist:

- eine resistive berührungsempfindliche Oberfläche (1) ;
- einen mit der resistiven berührungsempfindlichen Oberfläche (1) verbundenen Modulator (2); und
- einen mit dem Modulator (2) verbundenen Mikrocontroller;

wobei der Mikrocontroller aufweist:

- einen Ermittler von Koordinatenpaaren $(X_n, Y_n)$ ; und
- einen Bestätiger zum Bestätigen der Koordinaten $(X_n, Y_n)$ und des Drucks als gültig, ausgehend von aktuellen $(X_n, Y_n)$ und vorausgehenden $(X_{n-1}, Y_{n-1})$ Koordinaten, die der Ermittler bereitstellt;

**dadurch gekennzeichnet, dass** der Mikrocontroller außerdem aufweist:

- einen Wechsler zum Wechseln der Koordinatenwerte $(X_n, Y_n)$ zwischen einem Minimum und einem Maximum und vice versa von einer Ermittlung zur nächsten, wenn kein Druck vorhanden ist.

9. Resistive berührungsempfindliche Oberflächenvorrichtung (1) nach Anspruch 8, wobei der Mikrocontroller außerdem mindestens einen Komparator aufweist, der dazu dient,

- den Absolutbetrag $(|X_{n+1}-X_n|)$ der Differenz zwischen den Abszissenwerten von zwei aufeinanderfolgenden Koordinatenpaaren $(X_n,Y_n;X_{n+1},Y_{n+1})$ und den Absolutbetrag $(|Y_{n+1}-Y_n|)$ der Differenz zwischen den Ordinatenwerten der zwei aufeinanderfolgenden Koordinatenpaare $(X_n,Y_n;X_{n+1},Y_{n+1})$ mit einer Druckakzeptanzschwelle $(S_{acc})$ zu vergleichen; und/oder

den Absolutbetrag $(|X_{n+1}-X_n|)$ der Differenz zwischen den Abszissenwerten der zwei aufeinanderfolgenden Koordinatenpaare $(X_n,Y_n;X_{n+1},Y_{n+1})$ und den Absolutbetrag $(|Y_{n+1}-Y_n|)$ der Differenz zwischen den Ordinatenwerten der zwei aufeinanderfolgenden Koordinatenpaare $(X_n,Y_n;X_{n+1},Y_{n+1})$ mit einer Druckbeibehaltungsschwelle $(S_m)$ zu vergleichen, wobei das oder die Ergebnis(se) zu dem Bestätiger geschickt wird(werden), um den Druck zu bestätigen oder nicht.

10. Resistive berührungsempfindliche Oberflächenvorrichtung (1) nach Anspruch 8 oder 9, in welcher der Modulator (2) aufweist:

- einen ersten Kondensator (C1), der mit einem auf hohem elektrischem Potential liegenden ersten Anschluss eines Widerstands (RY) der resistiven berührungsempfindlichen Oberfläche (1) verbunden ist und die Ermittlung der Ordinatenwerte erlaubt;
- einen zweiten Kondensator (C2), der mit einem auf niedrigem elektrischem Potential liegenden zweiten Anschluss des Widerstands (RY) der resistiven berührungsempfindlichen Oberfläche (1) verbunden ist und die Ermittlung der Ordinatenwerte erlaubt;
- einen dritten Kondensator (C3), der mit einem auf hohem elektrischem Potential liegenden ersten Anschluss eines Widerstands (RX) der resistiven berührungsempfindlichen Oberfläche (1) verbunden ist und die Ermittlung der Abszissenwerte erlaubt;
- einen vierten Kondensator (C4), der mit einem auf niedrigem elektrischem Potential liegenden zweiten Anschluss des Widerstands (RX) der resistiven berührungsempfindlichen Oberfläche (1) verbunden ist und die Ermittlung der Abszissenwerte erlaubt;

wobei der andere Anschluss der Kondensatoren (C1-C4) mit Masse verbunden ist;
und in welchem der Wechsler des Mikrocontrollers Befehlssignale (COM_X+, COM_X-, COM_Y+ und COM_Y-) zum Modulator (2) schickt, um die Kondensatoren (C1-C4) aufzuladen oder zu entladen, um von einer Ermittlung zur nächsten die Koordinatenwerte $(X_n,Y_n)$ zwischen einem Minimum und einem Maximum und vice versa zu wechseln, wenn kein Druck vorhanden ist.

## FIG. 1

## FIG. 2a

## FIG. 2b

## FIG. 3

## FIG. 4

## FIG. 5

## FIG. 6a

MES_Y+

C1

C2

MES_Y-

RY  RZ  RX

1

MES_X+

C3

C4

MES_X-

## FIG. 6b

MES_Y+

C1

C2

MES_Y-

Vréf

RY  RZ  RX

1

MES_X+

C3

C4

MES_X-

## FIG. 6c

MES_Y+

C1

C2

MES_Y-

RY  RZ  RX

1

MES_X+

C3

C4

MES_X-

## FIG. 6d

MES_Y+

C1

C2

MES_Y-

Vréf

RY  RZ  RX

1

MES_X+

C3

C4

MES_X-

EP 2 251 773 B1

## FIG. 6e

## FIG. 6f

## FIG. 6g

## FIG. 6h

EP 2 251 773 B1

**EP 2 251 773 B1**

**RÉFÉRENCES CITÉES DANS LA DESCRIPTION**

**Documents brevets cités dans la description**

- WO 0203368 A

- EP 1411420 A